# EUROPEAN PATENT SPECIFICATION

(11) **EP 3 612 722 B1**
(45) Date of publication and mention of the grant of the patent: **31.05.2023**
(21) Application number: 18716263.1
(22) Date of filing: 06.04.2018
(51) Int. Cl.: F01N 3/08

(54) **METHOD OF REGENERATING A LEAN NOX TRAP LNT CATALYST**
VERFAHREN ZUM REGENERIEREN EINES LEAN NOX TRAP LNT-KATALYSATORS
PROCÉDÉ DE RÉGÉNÉRATION D'UN CATALYSEUR DE LEAN NOX TRAP LNT

(30) Priority: 18.04.2017 GB 201706113
(43) Date of publication of application: 26.02.2020
(73) Proprietor: Delphi Automotive Systems Luxembourg S.A., 4940 Baracharage (LU)
(72) Inventor: SCHREURS, Bart H., 6700 Waltzing (Arlon) (BE); PETERS, Michel H., 1135 Luxembourg (LU)
(74) Representative: Office Freylinger
(86) International application number: PCT/EP2018/058914
(87) International publication number: WO 2018/192785

(56) References cited:
- WO-A1-01/61162
- DE-A1-102015 224 635
- US-A1- 2012 222 399
- US-B1- 6 508 057

## Description

### TECHNICAL FIELD

This disclosure relates to exhaust systems for vehicles and has particular application to methodology used in catalyzer units for reducing NOx emissions such as such as Lean NOx Trap (LNT) catalysts. In this specification reference to LNT can be regarded as reference to such catalyzers/catalytic units and vice versa.

### BACKGROUND OF THE INVENTION

In vehicle exhaust systems, it is known to use catalyzers to reduce noxious emissions such as oxides of nitrogen, generally referred to as NOx. Such catalyzers act to store NOx and also to break down NOx stored during a regeneration phase. So to reduce the NOx emissions of a diesel or lean burn gasoline engine, Lean NOx Trap (LNT) catalysts can be used. These catalysts can store the NOx emissions produced by the engine under lean operating conditions (lambda >1). The NOx conversion efficiency of the LNT catalyst decreases gradually as more and more NOx is trapped in the catalyst. When the trapped NOx mass reaches a certain percentage of the LNT storage capacity, the LNT must be regenerated to reduce the stored NOx and to regain an acceptable NOx adsorption efficiency. At the end of the regeneration, the NOx absorber efficiency recovers again its maximum value. The regeneration is done under rich (Lambda<1) conditions and the catalyst temperature must be above a minimum threshold such that the chemical processes to reduce the stored NOx in the catalyst are possible.

The minimum temperature threshold of the catalyst to allow effective regenerations is typically around 225 to 235 degrees Celsius. In urban driving conditions and/or under cold ambient conditions it is not always possible to get to this temperature level in the catalyst especially with very efficient diesel engines. The higher the efficiency of the combustion engine, the lower the exhaust temperature will be. This leads to the problem that the regeneration can only be started after quite a long time of operation after a cold start. Due to this extended time period of operation without possibility of regeneration, the amount of NOx that needs to be stored in the catalyst can exceed the storage capacity of the catalyst. Hence the NOx conversion efficiency becomes very low which can lead to too high tailpipe NOx emissions and hence a potential violation of the emission legislation.

Known solutions include increasing the volume of the catalyst such that more NOx can be stored during the "cold" phase i.e. during the phase in which the temperature of the catalyst is too low to trigger a regeneration. However a problem with this approach is increased cost due to larger catalyst quantities (more precious metals are required).

An alternative is to apply active heating strategies: i.e. increase the exhaust temperature of the engine by changing the combustion parameter settings of the engine. A problem with this is that this leads to increased fuel consumption and as well as higher HC and CO emissions

A further alternative is to allow regenerations at lower catalyst temperatures; however this results in a significant increase in HC and CO emissions breakthrough downstream of the catalyst with a risk of exceeding the emission limits in respect to HC and/or CO. US patent application US 2012/222399 describes a method of controlling an exhaust gas treatment system dependent on an offset temperature; German patent applicant DE 1012015224365 describes a method of determining nitrogen oxide adsorbed on an LNT and PCT Application WO 01/61162 describes a method for determining the need for regenerations of a NOx catalyst.

It is an object of the invention to provide an improved method of implementing a LNT regeneration phase which allows necessary regeneration without significantly compromising HC and CO emissions, and furthermore in a fuel efficient manner.

### SUMMARY OF THE INVENTION

In one aspect is provided a method of regenerating a Lean NOx Trap (LNT) catalyst in a vehicle exhaust system, said LNT catalyst having a normal regeneration enable temperature threshold at which a full regeneration corresponding to a purge fraction which is equal or close to 100% may be performed, the method comprising the steps of;
i) determining the temperature upstream and downstream of LNT catalyst, and determining its NOx loading; **characterized by**
ii) implementing a partial regeneration phase if the temperature upstream reaches or is above a first temperature threshold, first temperature threshold being equal to or greater than the normal regeneration enable temperature threshold, and if the temperature downstream (14) reaches or is above a second temperature threshold, second temperature threshold being lower than the normal regeneration enable temperature threshold and being lower than said first temperature threshold; and
wherein partial regeneration phase is a regeneration phase stopped when the purge fraction reaches a level much lower than 100%, e.g. 30%, when the NOx loading in the LNT catalyst falls below a threshold level.

Said second temperature threshold is preferably at least 5°C lower than said first temperature threshold.

Said second temperature threshold may be between 10 and 25°C lower than said first temperature threshold.

Step ii) is implemented preferably only when the NOx loading in the LNT catalyst is at or above a threshold level.

The method may comprise repeating steps i) to ii) a maximum number of times and not repeating the said steps until a full regeneration is performed.

### BRIEF DESCRIPTION OF THE DRAWINGS

The present invention is now described by way of example with reference to the accompanying drawings in which:
Figure 1 shows a chart of air fuel ratio λ before (upstream) and after (downstream) of an LNT; thus the chart shows the typical values/behavior of a front and rear oxygen sensor during a LNT NOx regeneration;
Figure 2a shows a chart of hydrocarbon (HC) emission during regeneration cycles at different temperatures;
Figure 2b below shows corresponding the purge fraction (of NOx) over time;
Figure 3 shows the NOx conversion efficiency as a function of NOx stored;
Figure 4 illustrates one aspect of the invention and shows a plot of various parameters of a vehicle and exhaust system with a NOx catalyzer system with time.

### DESCRIPTION OF THE PREFERRED EMBODIMENTS

As mentioned, under engine lean burn conditions, NOx gases are trapped in NOx catalyzers and periodically need to be disposed of using a catalyzer such as an LNT. In order to do this, the engine is run under fuel rich conditions. However during this rich phase, there are problems if the exhaust system, in particular the catalyzers is cold. Hence the regeneration phase is performed under high temperatures when the catalyzer has reached a minimum temperature. Usually there are temperature sensors located upstream and downstream of the LNT, and these both need to be at the same minimum temperature for regeneration to take place. It is be noted that in some systems, one or more of the temperature sensors may be dispensed with and the temperatures may be estimated by the ECU e.g. by modelling techniques.

Typically oxygen (lambda) sensors are also located upstream and downstream of the NOx catalyzer which provides an indication of the air/fuel ratios at these locations.

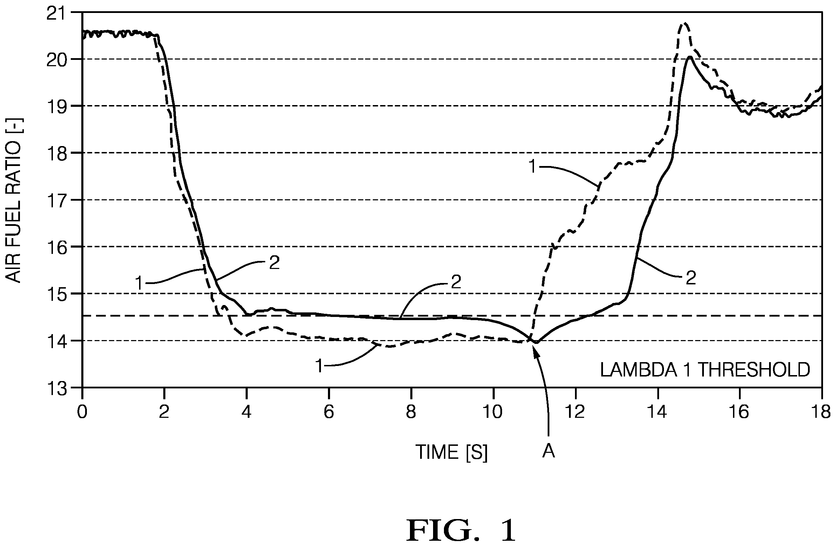

Figure 1 shows a chart of air fuel ratio λ before 1 (upstream) and after (downstream) 2 of an LNT; thus the chart shows the typical values/signals from a front and rear oxygen sensor during a LNT NOx regeneration. These values can be derived from the oxygen sensor located at the respective locations. The chart shows the variation in air/fuel ratio subsequent to a regeneration cycle /phase. At the beginning of the regeneration, there has been a build-up of NOx in the catalyzer. It is to be noted that typically an ECU provides a model of and/or can determine, i.e. knows, the level of the NOx stored in the catalyzer/LNT.

Initially the engine is running lean with a high air/fuel ratio of over 20. In order for regeneration of the LNT, the engine will switch the air/fuel ratio to rich, and thus the A/F ratio in front of the catalyzer/LNT will drop - in the chart this falls to below lambda =1 (which is stoichiometric conditions) shown by the thick dashed horizontal line. Generally the A/F ratio after (downstream) of the LNT will drop correspondingly, but during the regeneration phase will be slightly above that for the A/F ratio upstream of the LNT. The difference is explained in that the hydrocarbons in the fuel upstream are used to break down the NOx in the LNT. When the regeneration is finished (all NOx broken down), the A/F ratio downstream will become equal to the A/F ratio upstream and consequently becomes rich. This point, shown generally by arrow A can be recognized by the ECU and the engine condition switch back to lean.

An inherent problem in such NOx regeneration is that there is inevitable (e.g. unburnt) hydrocarbons exiting the exhaust during the regeneration. This becomes a more of a problem at low temperatures as the LNT efficiency drops at lower temperatures.

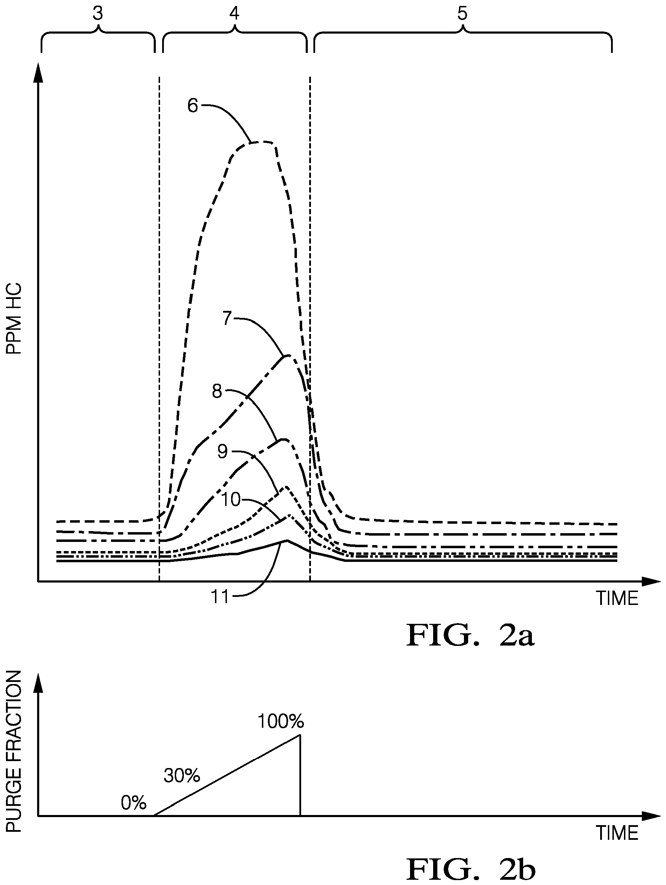

Figure 2a shows a chart of hydrocarbon (HC) emission before, during, and after a regeneration cycle at different temperatures to illustrate the above point. Three phases are shown: lean 3, rich 4, and back to lean 5, Plots 7, 8, 9, 10 and 11 shows the results for LNT temperatures of 200, 210, 220, 230, and 250 degrees C respectively. Plot 6 represents the HC level at the inlet of the catalyst (= Engine-out emissions, thus the other plots represent the HC level at the outlet of the catalyst for different catalyst temperatures : the colder the catalyst, the more the outlet catalyst HC level will get closer to the inlet ,engine-out, level. The catalyst HC conversion efficiency is dropping with colder temperatures).The plot in figure 2b below shows the corresponding purge fraction (of NOx) over time. At the end of the regeneration cycle (equivalent to the rich phase 4), the purge fraction rises to 100%, that is, all NOx is purged. As mentioned, a typical engine ECU models the LNT and ECU can determine the absolute amount of NOx stored in the LNT (which is needed to be purged); thus also the purge fraction.

In prior art techniques LNT regeneration will only take place once the requisite temperature upstream and downstream of the LNT is reached - this is on order to maximize efficiency.

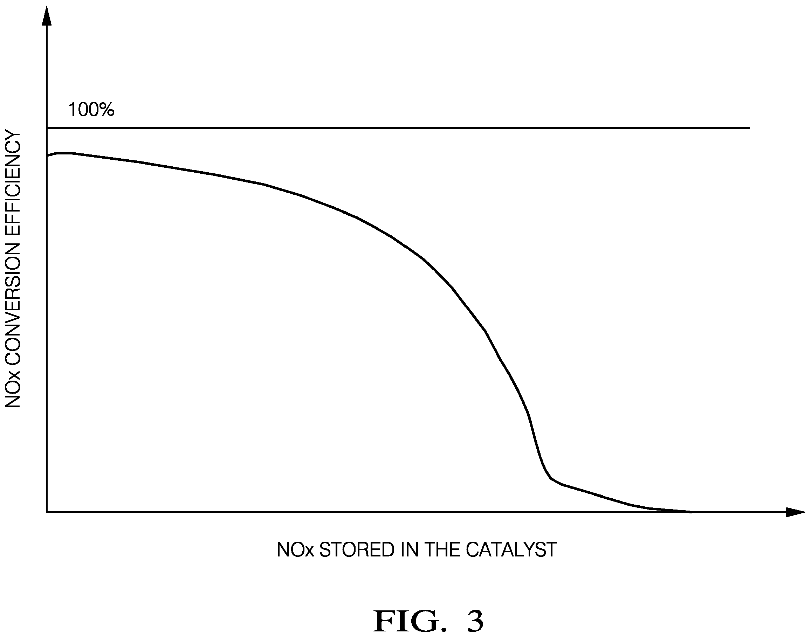

It can be observed that during the regeneration process of the LNT the breakthrough of HC and CO increases rapidly towards the end of the regeneration phase. As stated before, the regeneration is done under rich conditions and during this rich condition the engine out CO and HC are extremely high. As long as there is enough stored NOx and O2 remaining in the catalyst during the regeneration process and the temperature of the catalyst is high enough, the catalyst can treat these engine-out emissions typically very well. But when the stored O2 and NOx is more and more depleted towards the end of the regeneration, the CO and HC conversion efficiency drops rapidly. This is shown by figure 3 which shows the NOx conversion efficiency as a function of NOx stored. At lower level of NOX stored the conversion efficiency is higher.

As mentioned, looking back to figure 2a, the lower the temperature of the catalyst, the more this phenomenon is aggravated. This is why typically the regenerations are only allowed above a high enough catalyst temperature such that the breakthrough of HC and CO at the end of the regeneration is maintained within an acceptable level. During normal operation it can also be observed that the front part of the catalyst (catalyzer) heats up relatively fast during light acceleration phases, but the rear part of the catalyst remains too cold due to the thermal inertia. A successful regeneration can normally only be done when the temperature within the catalyst brick is over its full length above a certain temperature.

Figure 3 shows the NOx conversion efficiency as a function of NOx stored in the catalyst; generally higher efficiencies are achieved at greater NOx levels.

In summary the problem with current methodology is that of HC breakthrough during LNT regeneration which is a function of both catalyst temperature and purge fraction.

Methodology according to the current invention allows improved frequency of regeneration which is performed under conditions and in a way which does not largely compromise both fuel efficiency and HC breakthrough.

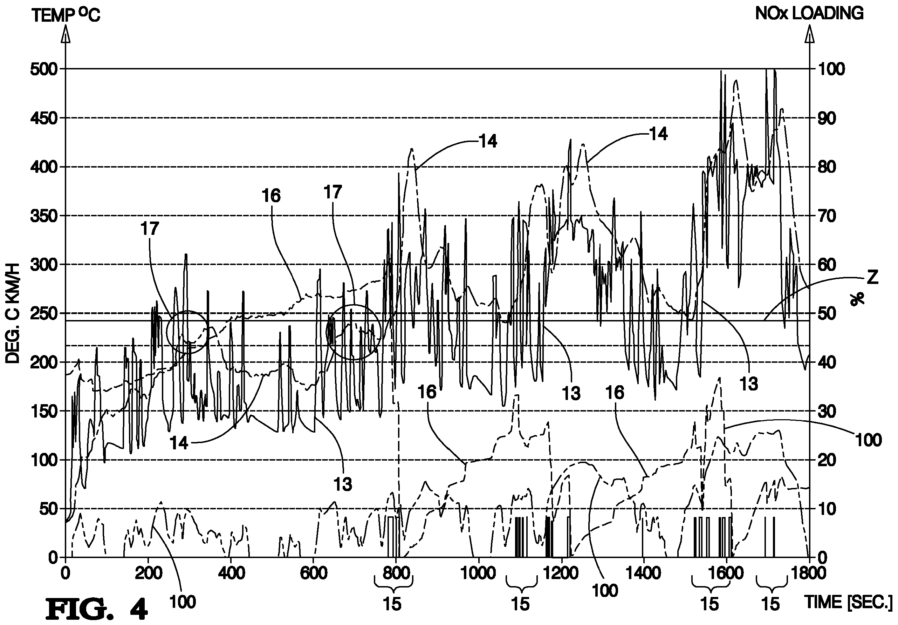

Figure 4 illustrates one aspect of the invention and shows a plot of various parameters of a vehicle and catalyzer (LNT) system with time. The top plot shows values of the temperature (e.g. measured) upstream 13 (into), and downstream 14 (out) of the catalyst (LNT), thus it shows an example of a temperature profile of the inlet and outlet of a LNT catalyst/catalyzer on a WLTC (World Harmonized Light Duty driving Test Cycle) emission cycle according to one aspect. The bottom plot shows the corresponding driving profile, showing e.g. speed 100 and the loading of NOx in the LNT as a percentage 16.

In prior art techniques a regeneration cycle is only implemented if both upstream and downstream temperatures reach a minimum threshold shown by line Z which is a temperature of 240°C. Thus in the plot, the first generation cycle (show by vertical lines) would in prior art methodology usually be performed at time points indicated by vertical lines of fixed length and which are shown grouped by reference numeral 15, where both the LNT inlet and outlet temperatures reach 240 degrees Celsius. This is usually only achievable when the vehicle reaches a certain speed for a certain duration in many cases. In the lower plot is shown the LNT NOx load level. As can be seem this drops rapidly after regeneration starts, and falls to a zero subsequent to ta full regeneration.

In aspects of the invention the regeneration phase is implemented when the temperatures upstream reaches a first threshold temperature e.g. 240°C and if the temperatures downstream reaches a second threshold temperature which is lower, typically 10 to 30°C lower; in the example this is 220°C. Of course the two threshold temperatures may be any values and the optimum of these values may depend on various factors such as the type on LNT, engine system and specification. Because of the thermal inertia of the LNT, the inventors have determined that is not necessary for the temperature downstream to reach the same level of temperatures of the first upstream temperature to initiate regeneration.

Thus in the example of figure 4, the regeneration is implemented, according to example of the invention, at points indicated by reference numeral 17, where the upstream temperatures is at 240°C or above and the downstream temperature reaches 220°C.

According to the invention the regeneration implemented may be only a partial regeneration where only a portion of the NOx in the LNT is converted or as a non claimed alternative the regeneration is performed for a short time. This improves the efficiency as regeneration takes place under lower NOx loading conditions so the advantage of aspects is that regeneration can be performed earlier when the efficiency is higher.

|Further, this partial regeneration creates an exothermic reaction in the catalyst and this will increase the temperature of the catalyst bed. This way, the temperature threshold for a "normal" / "full" regeneration will be reached shortly after the "partial" regeneration and a full regeneration can be triggered by the control system.

Preferably the partial or full regeneration will only be performed if the NOx loading is also at a minimum threshold. According to the invention the partial regeneration is such that regeneration is stopped once the NOx loading level falls below a certain level; i.e. when the purge fraction reaches a certain level, as will be explained in more detail.

Thus in the embodiment is provided (allowed) a first regeneration of the LNT after a cold start whenever the stored NOx exceeds a certain threshold even if the temperature in the rear part of the catalyst brick is below the normal regeneration enable threshold (10 to 20 degrees Celsius lower than the normal desired temperature threshold in the rear end of the catalyst) but to stop the regeneration way before it is fully finished i.e. when not all the stored O2 and NOx is depleted in the catalyst. This has the following effects. The regeneration of a part of the stored NOx (regeneration in the front part of the catalyst) can be done and the breakthrough of CO and HC is still acceptable. During this partial regeneration, due to the exothermic process in the front part of the catalyst, the temperature in the rear end of the LNT catalyst will further increase after the regeneration is stopped and thus the whole catalyst will more easily reach an acceptable temperature threshold. A little time after the first ("partial") regeneration is stopped, the temperature level of the whole catalyst will be high enough to authorize a "full" regeneration at the "normal" higher temperature threshold. At this time a full regeneration can be initiated /authorized.

The ECU may contain an on-board estimator of the NOx and oxygen masses stored in the LNT. There is also usually provided a model that calculates how much reductant during the rich phase are required to reduce the stored NOx and O2. Both information allow determining a purge fraction which is equal or close to 100% at the end of the full LNT regeneration (if the models are accurate enough). For the first regeneration at a lower rear brick temperature threshold, the regeneration is stopped on purpose when the purge fraction reaches a level much lower than 100% (e.g.30%).

Aspects of the invention provides an increase in the NOx conversion efficiencies of the LNT catalyst in critical situations where the temperature of the LNT brick is not warm enough over his full length. This is typically the case in city driving conditions and after cold starts.

By stopping the regeneration well before the regeneration is fully finished (Purge fraction around 30%), the NOx stored on the catalyst can still be substantially reduced and hence the conversion efficiency will increase without increasing too much the HC and CO tailpipe emissions.

## Claims

1. A method of regenerating a Lean NOx Trap LNT catalyst in a vehicle exhaust system, said LNT catalyst having a normal regeneration enable temperature threshold at which a full regeneration corresponding to a purge fraction which is equal or close to 100% may be performed, the method comprising the steps of;
i) determining the temperature upstream (13) and downstream (14) of said LNT catalyst, and determining its NOx loading (16); **characterized by**
ii) implementing a partial regeneration phase if the temperature upstream (13) reaches or is above a first temperature threshold, said first temperature threshold being equal to or greater than the normal regeneration enable temperature threshold, and if the temperature downstream (14) reaches or is above a second temperature threshold, said second temperature threshold being lower than the normal regeneration enable temperature threshold and being lower than said first temperature threshold; and
wherein said partial regeneration phase is a regeneration phase stopped when the purge fraction reaches a level much lower than 100%, e.g. 30%, when the NOx loading (16) in the LNT catalyst falls below a threshold level.

2. A method as claimed in claim 1 wherein said second temperature threshold is at least 5°C lower than said first temperature threshold.

3. A method as claimed in claims 1 or 2 herein said second temperature threshold is between 10 and 25°C lower than said first temperature threshold.

4. A method as claimed in claims 1 to 3 wherein step ii) is implemented only when the NOx loading (16) in the LNT catalyst is at or above a threshold level.

5. A method as claimed in any one of claims 1 to 4 comprising repeating steps i) to ii) a maximum number of times and not repeating the said steps until a full regeneration is performed.

## Patentansprüche

1. Verfahren zur Regeneration eines Lean-NOx-Trap-LNT-Katalysators in einer Fahrzeugabgasanlage, wobei der LNT-Katalysator eine normale Regenerationsermöglichungstemperaturschwelle aufweist, bei der eine vollständige Regeneration, die einer Spülfraktion entspricht, die gleich oder nahe 100 % ist, durchgeführt werden kann, wobei das Verfahren die Schritte umfasst:
i) Bestimmen der Temperatur stromaufwärts (13) und stromabwärts (14) von dem LNT-Katalysator und Bestimmen seiner NOx-Beladung (16); **gekennzeichnet durch**
ii) Implementieren einer Teilregenerationsphase, wenn die Temperatur stromaufwärts (13) eine erste Temperaturschwelle erreicht oder über dieser liegt, wobei die erste Temperaturschwelle gleich oder größer als die normale Regenerationsermöglichungstemperaturschwelle ist, und wenn die Temperatur stromabwärts (14) eine zweite Temperaturschwelle erreicht oder über dieser liegt, wobei die zweite Temperaturschwelle niedriger als die normale Regenerationsermöglichungstemperaturschwelle ist und niedriger als die erste Temperaturschwelle ist; und
wobei die Teilregenerationsphase eine Regenerationsphase ist, die gestoppt wird, wenn die Spülfraktion ein Niveau erreicht, das viel niedriger als 100 % ist, z. B. 30 %, wenn die NOx-Beladung (16) in dem LNT-Katalysator unter ein Schwellenniveau fällt.

2. Verfahren nach Anspruch 1, wobei die zweite Temperaturschwelle mindestens 5 °C niedriger als die erste Temperaturschwelle ist.

3. Verfahren nach Anspruch 1 oder 2, wobei die zweite Temperaturschwelle zwischen 10 und 25 °C niedriger als die erste Temperaturschwelle ist.

4. Verfahren nach den Ansprüchen 1 bis 3, wobei Schritt ii) nur implementiert wird, wenn die NOx-Beladung (16) in dem LNT-Katalysator bei oder über einem Schwellenniveau liegt.

5. Verfahren nach einem der Ansprüche 1 bis 4, umfassend ein Wiederholen der Schritte i) bis ii) für eine maximale Anzahl und kein Wiederholen der Schritte, bis eine vollständige Regeneration durchgeführt ist.

## Revendications

1. Procédé de régénération d'un catalyseur piège à NOx à mélange pauvre LNT dans un système d'échappement de véhicule, ledit catalyseur LNT ayant un seuil de température d'activation de régénération normale auquel peut être effectuée une régénération complète correspondant à une fraction de purge qui est égale ou proche de 100 %, le procédé comprenant les étapes de :
i) détermination de la température en amont (13) et en aval (14) dudit catalyseur LNT, et détermination de sa charge en NOx (16) ; **caractérisée par**
ii) la mise en oeuvre d'une phase de régénération partielle si la température en amont (13) atteint ou est supérieure à un premier seuil de température, ledit premier seuil de température étant égal ou supérieur au seuil de température d'activation de régénération normale, et si la température en aval (14) atteint ou est supérieure à un second seuil de température, ledit second seuil de température étant inférieur au seuil de température d'activation de régénération normale et étant inférieur audit premier seuil de température ; et
dans lequel ladite phase de régénération partielle est une phase de régénération arrêtée lorsque la fraction de purge atteint un niveau bien inférieur à 100 %, par ex. 30 %, lorsque la charge en NOx (16) dans le catalyseur LNT chute en dessous d'un niveau seuil.

2. Procédé selon la revendication 1, dans lequel ledit second seuil de température est inférieur d'au moins 5 °C audit premier seuil de température.

3. Procédé selon les revendications 1 ou 2, dans lequel ledit second seuil de température est inférieur de 10 à 25 °C audit premier seuil de température.

4. Procédé selon les revendications 1 à 3, dans lequel l'étape ii) est mise en oeuvre uniquement lorsque la charge de NOx (16) dans le catalyseur LNT est égale ou supérieure à un niveau seuil.

5. Procédé selon l'une quelconque des revendications 1 à 4 comprenant la répétition des étapes i) à ii) un nombre maximum de fois et la non répétition desdites étapes jusqu'à ce qu'une régénération complète soit effectuée.
